# EUROPEAN PATENT APPLICATION

(11) **EP 4 648 337 A1**
(43) Date of publication of application: **12.11.2025**
(21) Application number: 24738762.4
(22) Date of filing: 05.01.2024
(51) Int. Cl.: H04L 5/00, H04L 47/24, H04L 1/00, H04W 28/02, H04W 74/00, H04W 84/12

(54) **METHOD AND DEVICE FOR CLASSIFYING LOW-LATENCY TRAFFIC IN WIRELESS LAN SYSTEM**

(30) Priority: 06.01.2023 KR 20230002403; 11.01.2023 KR 20230004184; 20.01.2023 KR 20230008999; 06.02.2023 KR 20230015808; 24.02.2023 KR 20230025367
(71) Applicant: LG Electronics Inc., Yeongdeungpo-gu Seoul 07336 (KR)
(72) Inventor: BAEK, Sunhee, Seoul 06772 (KR); JANG, Insun, Seoul 06772 (KR); CHOI, Jinsoo, Seoul 06772 (KR)
(74) Representative: Mooser, Sebastian Thomas
(86) International application number: PCT/KR2024/000284
(87) International publication number: WO 2024/147694

(57) **Abstract**

A method and a device for classifying low-latency traffic in a wireless LAN system are disclosed. A method performed by a first STA in a wireless LAN system according to an embodiment of the present disclosure may comprise the steps of: receiving, from a second STA, at least one low-latency (LL)-related ID and QoS characteristic information related to LL traffic; transmitting, to the second STA, a request frame for a stream classification service (SCS) process; and receiving, from the second STA, a response frame for the request frame. Here, the at least one LL-related ID is commonly applied to one or more STAs coupled to the second STA, and at least one of the request frame and the response frame may include information related to allocation of the LL-related ID.

## Description

### [TECHNICAL FIELD]

The present disclosure relates to a method and device for classifying low latency traffic in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [DISCLOSURE]

### [TECHNICAL PROBLEM]

The technical object of the present disclosure is to provide a method and device for classifying low latency traffic in a wireless local area network (WLAN) system.

The technical object of the present disclosure is to provide a method and device for notifying ID information and related QoS characteristic information for classification of low-latency traffic.

The technical object of the present disclosure is to provide a method and device for performing low-latency traffic classification between an AP and a STA in a stream classification service (SCS) process.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless LAN system according to an aspect of the present disclosure may comprise: receiving, from a second STA, at least one low latency (LL)-related identifier (ID) and quality of service (QoS) characteristic information related to LL traffic; transmitting, to the second STA, a request frame for a stream classification service (SCS) process; and receiving, from the second STA, a response frame for the request frame. Herein, the at least one LL-related ID may be commonly applied to one or more STAs associated with the second STA, and at least one of the request frame or the response frame may include information related to allocation of a LL-related ID.

A method performed by a second station (STA) in a wireless LAN system according to an additional aspect of the present disclosure may comprise: transmitting, to a first STA, at least one low latency (LL)-related identifier (ID) and quality of service (QoS) characteristic information related to LL traffic; receiving, from the first STA, a request frame for a stream classification service (SCS) process; and transmitting, to the first STA, a response frame for the request frame. Herein, the at least one LL-related ID may be commonly applied to one or more STAs associated with the second STA, and at least one of the request frame or the response frame may include information related to allocation of a LL-related ID.

### [Technical Effects]

According to the present disclosure, a method and device for classifying low latency traffic in a wireless local area network (WLAN) system may be provided.

According to the present disclosure, a method and device for notifying ID information and related QoS characteristic information for classifying low-latency traffic may be provided.

According to the present disclosure, a method and device for performing low-latency traffic classification between an AP and a STA in a stream classification service (SCS) process may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for explaining an example of an individual TWT operation to which the present disclosure may be applied.
FIG. 9 is a diagram for explaining an example of a broadcast TWT operation to which the present disclosure may be applied.
FIG. 10 is a diagram for explaining an example of a TWT information element format.
FIG. 11 illustrates a QoS (quality of service) characteristic element applicable to an embodiment of the present disclosure.
FIG. 12 illustrates a structure of a low-latency traffic element and an low latency (LL) ID information field format included therein according to an embodiment of the present disclosure.
FIG. 13 illustrates an LL ID subfield included in a control information field of a QoS characteristic element according to an embodiment of the present disclosure.
FIG. 14 illustrates an LL ID field included in a QoS characteristic element according to an embodiment of the present disclosure.
FIG. 15 illustrates an existing SCS descriptor element applicable to an embodiment of the present disclosure.
FIG. 16 illustrates an SCS descriptor element for indicating an LL ID according to an embodiment of the present disclosure.
Fig. 17 illustrates a structure of low-latency traffic information control based on A-Contol according to an embodiment of the present disclosure.
Fig. 18 illustrates an operation flow chart by a first STA according to an embodiment of the present disclosure.
Fig. 19 illustrates an operation flow chart by a second STA according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

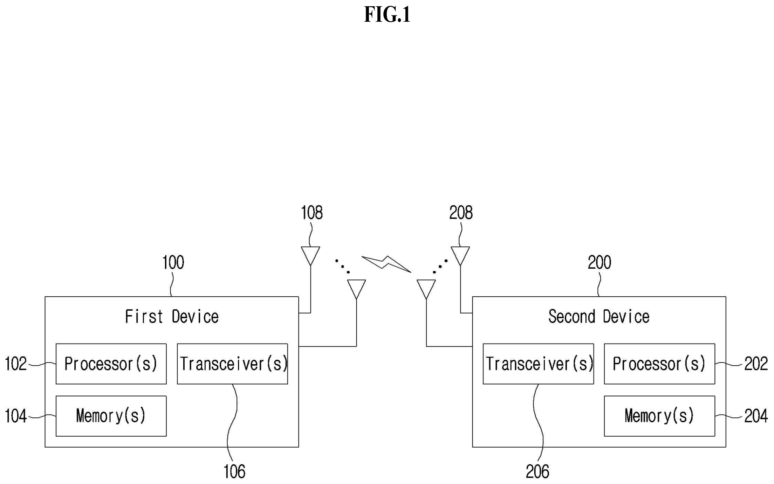

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

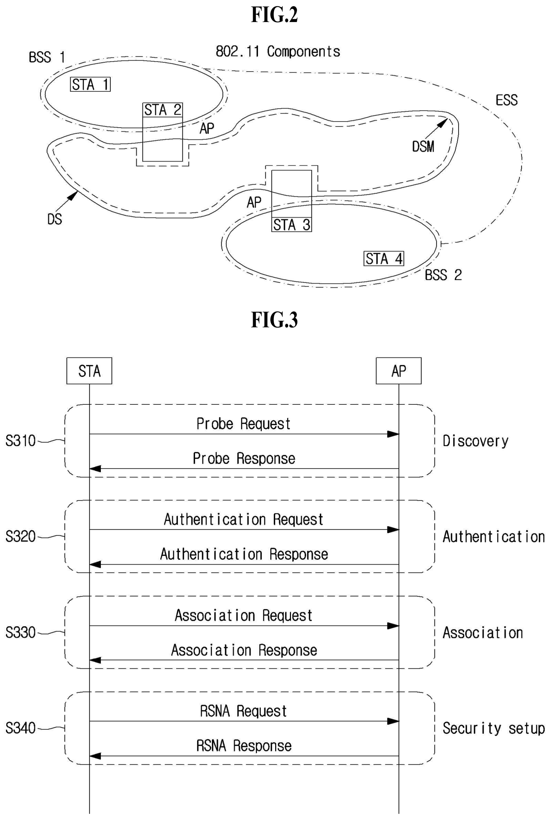

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

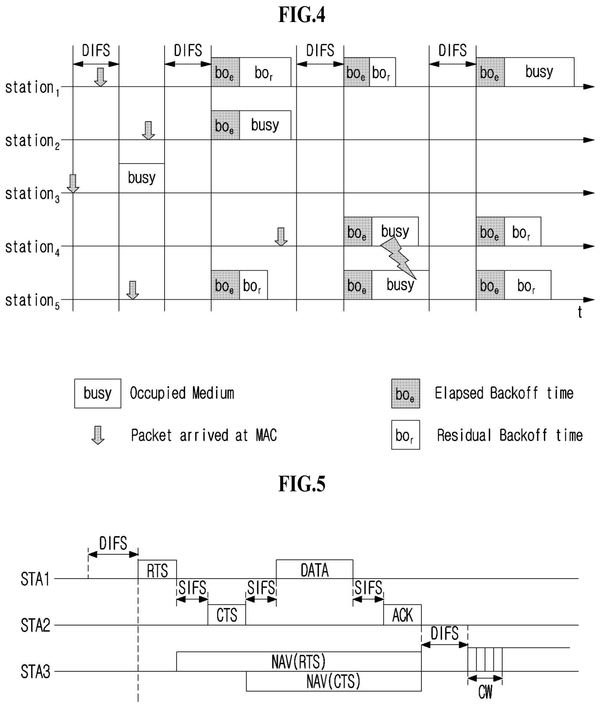

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

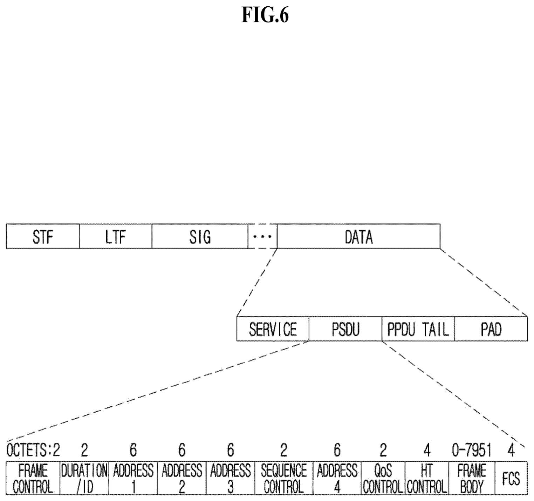

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

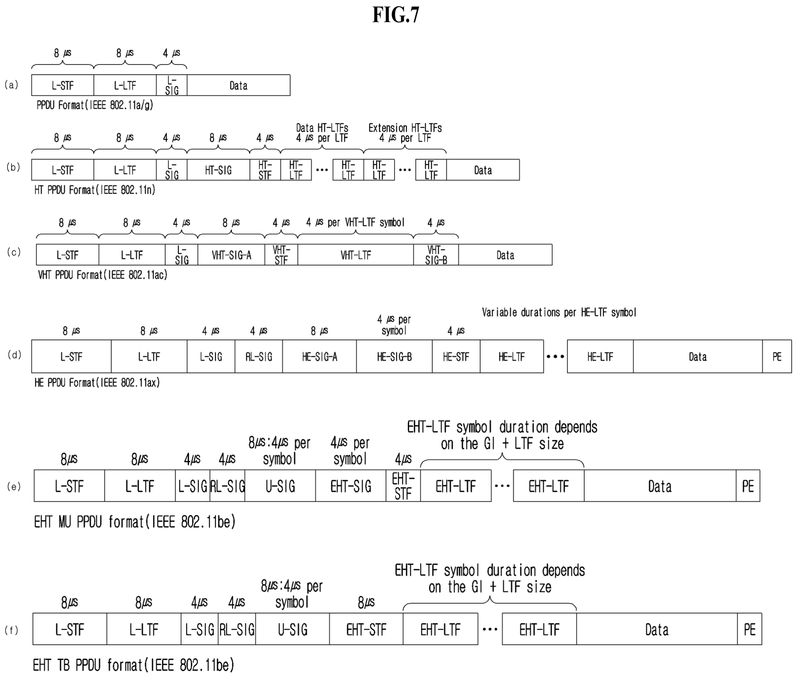

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Target wake time (TWT)

A TWT is a power saving (PS) technology which may improve energy efficiency of non-AP STAs by defining a service period (SP) between an AP and non-AP STA and sharing information about a SP each other to reduce media contention.

A STA which performs a request/a suggest/a demand, etc. in a TWT setup step may be referred to as a TWT requesting STA. In addition, an AP which responds to a corresponding request such as Accept/Reject, etc. may be referred to as a TWT responding STA.

A setup step may include a TWT request for an AP of a STA, a type of a TWT operation performed and a process of determining/defining a frame type transmitted or received. A TWT operation may be divided into an individual TWT and a broadcast TWT.

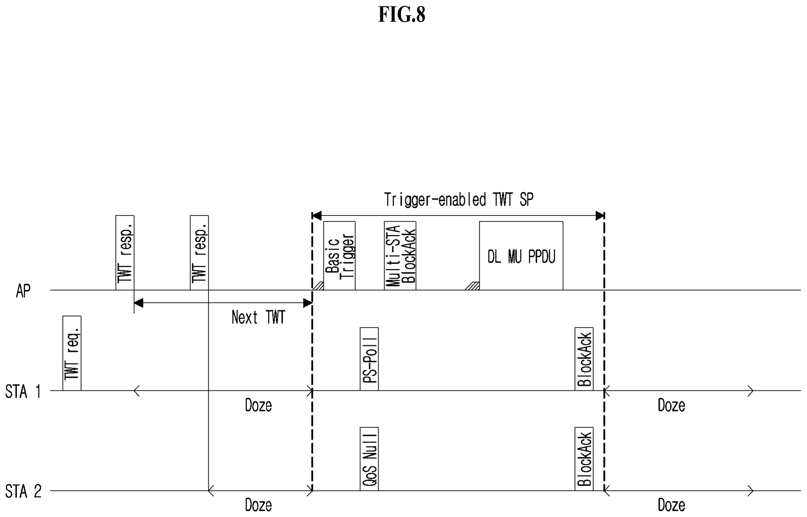

FIG. 8 is a diagram for describing an example of an individual TWT operation to which the present disclosure may be applied.

An individual TWT is a mechanism that an AP and non-AP STA perform data exchange after performing negotiation for an awake/doze status of a non-AP STA through transmission or reception of a TWT request/response frame.

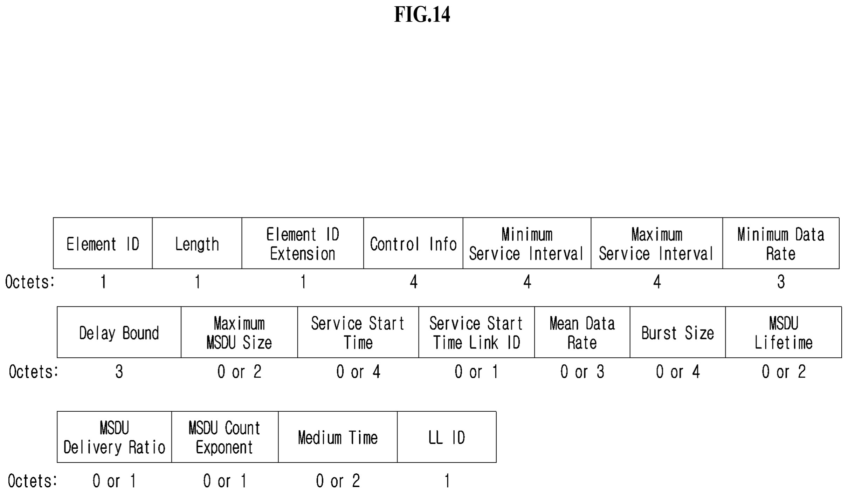

In an example of FIG. 14, an AP and STA1 may form a trigger-enabled TWT agreement through a TWT request frame and a TWT response frame.

Here, a method used by STA1 is a solicited TWT method, which is a method that when STA 1 transmits a TWT request frame to an AP, STA 1 receives information for a TWT operation from an AP through a TWT response frame.

On the other hand, STA 2 which performs an unsolicited TWT method may receive information on a trigger-enabled TWT agreement configuration from an AP through an unsolicited TWT response.

Specifically, STA 2 may calculate a next TWT by adding a specific number from a current TWT value. During a trigger-enabled TWT SP, an AP may transmit a trigger frame to STAs. The trigger frame may inform STAs that an AP has buffered data. In response to it, STA 1 may inform an AP of its awake status by transmitting a PS-Poll frame. In addition, STA 2 may inform an AP of its awake status by transmitting a QoS Null frame. Here, a data frame transmitted by STA 1 and STA 2 may be a frame in a TB PPDU form. An AP which confirmed a status of STA 1 and STA 2 may transmit a DL MU PPDU to awake STAs. When a corresponding TWT SP expires, STA 1 and STA 2 may switch to a doze status.

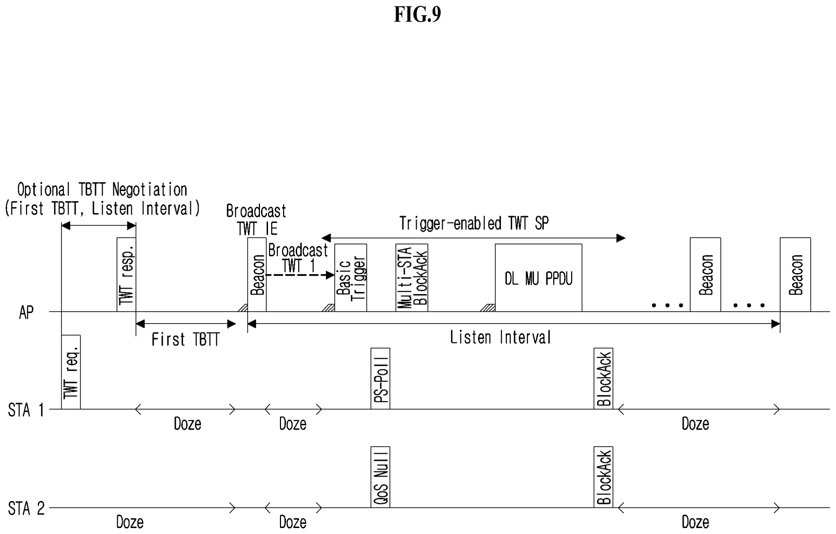

FIG. 9 is a diagram for describing an example of a broadcast TWT operation to which the present disclosure may be applied.

A broadcast TWT is a TWT that a non-AP STA (or a TWT scheduling STA) acquires information on a target beacon transmission time (TBTT) and a listen interval, etc. by transmitting or receiving a TWT request/response frame with an AP (or a TWT scheduled STA). Here, a negotiation operation for a TBTT may be performed. Based on it, an AP may define a frame which will include scheduling information of a TWT through a beacon frame.

In FIG. 9, STA 1 performs a solicited TWT operation and STA 2 performs an unsolicited TWT operation. An AP may transmit a DL MU PPDU after confirming an awake status of STAs through a trigger transmitted by an AP. It may be the same as a process of an individual TWT. In a broadcast TWT, a trigger-enabled TWT SP including a beacon frame may be repeated several times at a certain interval.

The transmission of TWT information may be accomplished through a TWT information frame and a TWT information element. The TWT information frame is transmitted by an STA to request or transmit information on a TWT agreement, and is transmitted by one of the STAs of an existing TWT agreement. The action field of the TWT Information frame includes a TWT information field.

A TWT Information field may include a 3-bit TWT flow identifier subfield, a 1-bit response requested subfield, a 1-bit next TWT request subfield, a 2-bit next TWT subfield size subfield, a 1-bit all TWT subfield and a 0/32/48/64-bit next TWT subfield.

Here, the TWT flow identifier subfield may be used to identify the flow for which TWT information is requested/provided.

The Response Request subfield may indicate whether the transmitter of a frame including a TWT Information field requests transmission of a TWT Information frame (to be transmitted in response to reception of the frame). To request the receiver not to transmit a TWT Information frame in response to reception of the frame, the Response Request subfield value may be set to 0. To request the receiver to transmit a TWT Information frame in response to reception of the frame, the Response Request subfield value may be set to 1.

To indicate a request for transmission of a TWT information frame containing the following TWT field (where the length of the TWT information frame is not 0), the value of the next TWT subfield may be set to 1. Otherwise, the value of the next TWT subfield may be set to 0.

The Next TWT Subfield Size subfield may indicate the size of the next TWT subfield. When the size of the next TWT subfield is 0/32/48/64 bits, the value of the Next TWT Subfield Size subfield may be set to 0/1/2/3.

All TWT subfield values may be set to 1 by the HE STA, which may mean that the TWT information frame has realigned all TWTs. Otherwise, all TWT subfield values may be set to 0.

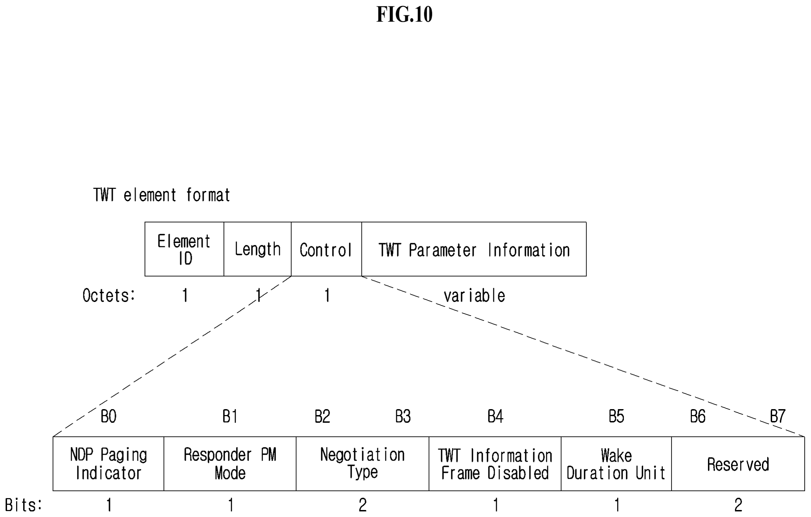

FIG. 10 is a drawing for explaining an example of a TWT information element format.

The TWT element may be transmitted and received in a beacon, probe response, (re)association response frame, etc. The TWT element may include an element identifier (element ID) field, a length field, a control field, and a TWT parameter information field.

The control fields of a TWT element have the same format, regardless of whether it is an individual TWT or a broadcast TWT.

A NDP paging indication subfield may have a value of 1 when a NDP paging field exists and may have a value of 0 when a NDP paging field does not exist.

A responder PM mode subfield may represent a power management (PM) mode.

A negotiation type subfield may represent whether information included in a TWT element is about a negotiation of broadcast TWT or individual TWT(s) or is about a wake TBTT interval.

For example, when a value of a negotiation type subfield is 0, a TWT subfield is about a future individual TWT SP start time and a TWT element includes one individual TWT parameter set. It may correspond to an individual TWT negotiation between a TWT requesting STA and a TWT responding STA or may correspond to an individual TWT announcement by a TWT responder.

For example, when a value of a negotiation type subfield is 1, a TWT subfield is about a next TBTT time and a TWT element includes one individual TWT parameter set. It may correspond to a wake TBTT and a wake interval negotiation between a TWT scheduled STA and a TWT scheduling AP.

For example, when a value of a negotiation type subfield is 2, a TWT subfield is about a future broadcast TWT SP start time and a TWT element includes at least one broadcast TWT parameter set. It may correspond to providing a broadcast TWT schedule to a TWT scheduled STA by including a TWT element in a broadcast management frame transmitted by a TWT scheduling AP.

For example, when a value of a negotiation type subfield is 3, a TWT subfield is about a future broadcast TWT SP start time and a TWT element includes at least one broadcast TWT parameter set. It may correspond to managing membership of a broadcast TWT schedule by including a TWT element in an individually addressed management frame transmitted by any one of a TWT scheduled STA or a TWT scheduling AP.

When a TWT information frame disabled subfield is configured as 1, it represents that reception of a TWT information frame by a STA is disabled and otherwise, it may be configured as 0.

A wake duration unit subfield represents a unit of a nominal minimum TWT wake duration field. A wake duration unit subfield may be configured as 0 when a unit is 256us and may be configured as 1 when a unit is a TU. When it is not a HE/EHT STA, a wake duration unit subfield may be configured as 0.

A most significant bit (MSB) of a negotiation type field may correspond to a broadcast field. When the broadcast field is 1, at least one broadcast TWT parameter set may be included in a TWT element. When the broadcast field is 0, only one individual TWT parameter set may be included in a TWT element. A TWT element that the broadcast field is configured as 1 may be referred to as a broadcast TWT element.

In addition, although FIG. 10 illustrates a case where the reserved field consists of 2 bits, this is only one embodiment. For example, a TWT element may include a Link ID bitmap present field (e.g., 1 bit) and include a reserved field (e.g., 1 bit).

For example, when the Link ID Bitmap Existence field is set to 1, the Link ID Bitmap subfield may be set to exist in the individual TWT parameter set field format described later, and when the Link ID Bitmap Existence field is set to 0, the Link ID Bitmap subfield may be set not to exist in the individual TWT parameter set field format.

### Quality of service characteristics element

A QoS characteristic element defined in a wireless LAN system includes a set of parameters defining characteristics and QoS expectations of a traffic flow. In this regard, in terms of a specific non-AP EHT STA, the QoS characteristic element is used by the EHT AP and the non-AP EHT STA to support QoS traffic transfer using a stream classification service (SCS) procedure and a restricted TWT procedure.

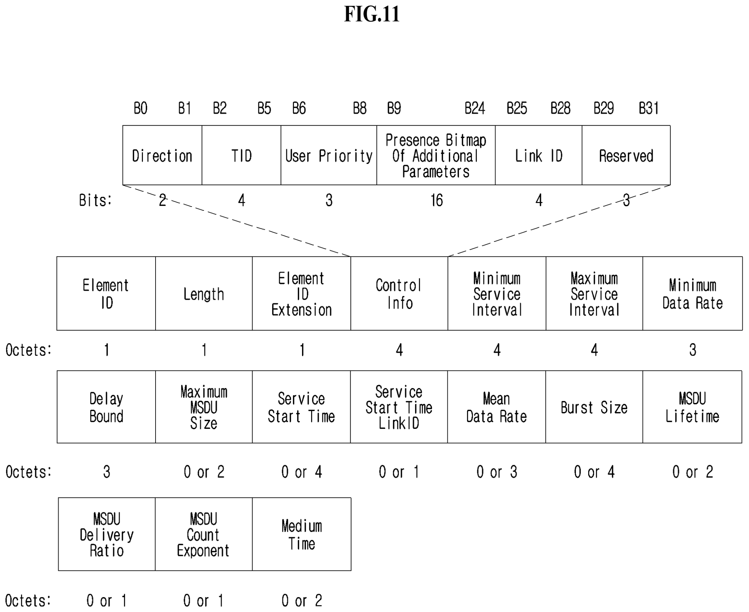

FIG. 11 illustrates QoS characteristic elements applicable to an embodiment of the present disclosure.

Specifically, the Control Info field includes a Direction subfield, a Traffic ID (TID) subfield, a User Priority (UP) subfield, a Presence Bitmap Of Additional Parameters subfield, a LinkID subfield, and a reserved bit (e.g., 3 bits).

The direction subfield specifies the direction of the data described by the corresponding element, and indicates uplink, downlink, direct link, or reserved. Here, uplink means that MSDU(s) or A-MSDU(s) are transmitted from a non-AP STA to an AP, downlink means that MSDU(s) or A-MSDU(s) are transmitted from an AP to a non-AP STA, and direct link means that MSDU(s) or A-MSDU(s) are transmitted over a P2P (Peer-to-Peer) link.

The TID subfield contains the TID value of the data frame described by the element. The TID subfield is set to the same value as the UP subfield. Here, values 8 to 15 of the TID subfield are reserved. In this regard, the presence of the TID subfield may be for future extension to allow conveying TID values independent of user priority (UP).

The UP subfield contains the UP value (one of 0 to 7) of the data frame described by the element. If a traffic classification (TCLAS) element is present in the SCS request frame containing the element, the UP subfield is set to the UP value specified in the TCLAS element.

The Presence Bitmap Of Additional Parameters subfield contains a bitmap whose ith entry is set to 1 if the ith field starting from the Maximum MSDU Size field is present in that element. For each field starting from the Maximum MSDU Size field, the value 0 is reserved.

The Link ID subfield contains a link identifier corresponding to the link on which a direct link transmission is to occur. If the Direction subfield is equal to any value except a value indicating a direct link, that subfield is reserved.

The Minimum Service Interval field contains an unsigned integer specifying the minimum interval (e.g., in milliseconds (ms)) between two consecutive SPs (service periods, scheduled periods) to which a frame exchange (e.g., UL/DL/direct link based frame exchange) is allocated. The Maximum Service Interval field contains an unsigned integer specifying the maximum interval (e.g., in ms) between two consecutive SPs (service periods, scheduled periods) to which a frame exchange (e.g., UL/DL/direct link based frame exchange) is allocated. In this regard, the value of the Maximum Service Interval field is greater than or equal to the value of the Minimum Service Interval field.

The Minimum Data Rate field contains an unsigned integer specifying the minimum data rate (e.g., kilobits per second) specified in the MAC SAP for transmission of MSDU(s) or A-MSDU(s) belonging to the traffic flow described by that element.

The delay bound field contains an unsigned integer specifying the maximum time (in microseconds) allowed to transmit MSDU(s) or A-MSDU(s) belonging to the traffic flow described by the element.

The Maximum MSDU Size field contains an unsigned integer specifying the maximum size (in octets) of the MSDU(s) or A MSDU(s) belonging to the traffic flow described by the element.

The Service Start Time field contains an unsigned integer that specifies the expected time (e.g., in microseconds) when traffic starts for the associated TID. Here, the Service Start Time indicates to the AP the time when the STA is expected to exchange frames corresponding to the TID specified in that element. The field indicates the low-order four octets of the TSF timer associated with the link specified in the Link ID field at the expected SP start.

The four least significant bits (LSBs) of the Service Start Time LinkID field indicate the link identifier corresponding to the link for which the TSF timer is used to indicate the service start time. The four most significant bits (MSBs) are reserved. This field is present only if the Service Start Time field is present.

The Mean Data Rate field indicates the average data rate (e.g., in kilobits per second) specified in the MAC SAP for transmission of MSDU(s) or A-MSDU(s) belonging to the traffic flow within the bounds of that element.

The Burst Size field is 4 octets in length and contains an unsigned integer specifying the maximum burst (i.e., in octets) of MSDU(s) or A-MSDU(s) belonging to a traffic flow that arrives at the MAC SAP within the time specified in the Delay Limit field.

The MSDU Lifetime field contains an unsigned integer specifying the maximum time (in milliseconds) after which an MSDU may become unusable at the MAC data service interface, even if the MSDU has been received by the receiver. Thus, the MSDU transmitter may consider discarding such an MSDU at the transmitter before it is transmitted over-the-air. The time specified in this field is greater than or equal to the time specified in the Delay Limit field (if present).

The MSDU Delivery Info field contains MSDU delivery information. The MSDU Delivery Info field contains an MSDU Delivery Ratio subfield and an MSDU Count Exponent subfield. Here, the MSDU Delivery Ratio subfield specifies an MSDU loss requirement (e.g., 95% to 99.9999%). The MSDU Count Exponent subfield contains an unsigned integer that specifies an exponent for calculating the number of received MSDUs used to calculate the MSDU delivery ratio. In this case, the number of received MSDUs is equal to 10 MSDU count exponents. If a delay bound is not specified, the MSDU Delivery Info subfield does not exist.

### Classification of low latency/latency sensitive traffic

In the case of the stream classification service (SCS) procedure defined in the existing wireless LAN system, an STA (e.g., non-AP STA) includes information for classification of traffic in an SCS request frame and requests the AP, and the traffic classification information may be identified based on an SCS ID. In response, the AP transmits a status for the SCS ID in an SCS response frame, through which negotiation, i.e., SCS negotiation for traffic classification, may be completed.

At this time, the SCS ID corresponds to an identifier (e.g., ID) that may be used only between the STA and the AP that transmit and receive the SCS request frame and the SCS response frame, and this corresponds to an identifier (e.g., ID) that may be used only at the MLD level in the case of an MLD (multi link device). That is, STA 1 and STA 2 that performed SCS negotiation with the AP may not know each other's SCS ID, nor the traffic classification information included/associated with the SCS ID.

For example, the traffic classification information corresponding to SCS ID 1 of STA 1 and the traffic classification information corresponding to SCS ID 1 of STA 2 may be the same or different. Additionally or alternatively, the traffic classification information corresponding to SCS ID 1 of STA 1 and the traffic classification information corresponding to SCS ID 2 of STA 2 may be the same or different.

In consideration of this, the present disclosure proposes a method of using a common identifier (e.g., ID) based on classification information for low-latency (or delay-sensitive) traffic for common use of SCS ID among STAs that have performed SCS negotiation.

The values/names proposed in the present disclosure below are only examples and are not limited thereto, and may be changed/replaced and applied. Additionally, the STA in the present disclosure may include a non-AP STA and an AP STA.

### Embodiment 1

This embodiment relates to a method for defining and sharing LL IDs that are mapped based on low latency (LL) related QoS characteristics.

In the present disclosure, the LL ID may correspond to a separate identifier/identification information for classifying low-latency related traffic/data. That is, the LL ID may be identification information that is distinct from the existing SCS ID in terms of definition and utilization.

Specifically, a method of delivering one or more LL IDs and information for the LL IDs to associated STA(s) based on LL-related QoS characteristic(s) defined by an AP is proposed.

The AP may share an LL ID that can be commonly used by STAs associated with the AP, and, in this case, may also share a value (or values) of QoS characteristic(s) for LL data (which may be replaced with an LL traffic name) mapped to each LL ID.

In this respect, each LL ID in the present disclosure may mean a criterion for transmission requirements for LL data that can be commonly used by associated STAs.

Information related to the aforementioned LL ID may be transmitted via a frame related to the association procedure (e.g., a beacon frame or a probe response frame), and may include one or more of the following information:
- Number of LL IDs defined by the AP in the reduced neighbor reporting (RNR) element.
- A specific element containing QoS characteristics mapped to each LL ID.

For example, the AP may notify the STA(s) via the beacon frame/probe response frame using a specific element that includes information about criteria for identifying low-latency traffic based on the QoS characteristic(s) of the LL data mapped to the LL ID.

In the following disclosure, for clarity of explanation, the specific element is referred to as a low latency traffic element (LLT element).

A low-latency traffic element may be configured based on a value of all or some fields within a QoS characteristic element (e.g., the QoS characteristic element of Fig. 11) of an SCS request/response frame, a field value of another element other than the QoS characteristic element, and/or a new field value of a new element indicating a characteristic of LL data.

In the present disclosure, a representative example is described in which the value of the LL ID is defined from 0 to 7; however, the scope of the present disclosure is not limited thereto. That is, the LL ID proposed in the present disclosure may be defined to have a value less than 7 or a value greater than 7.

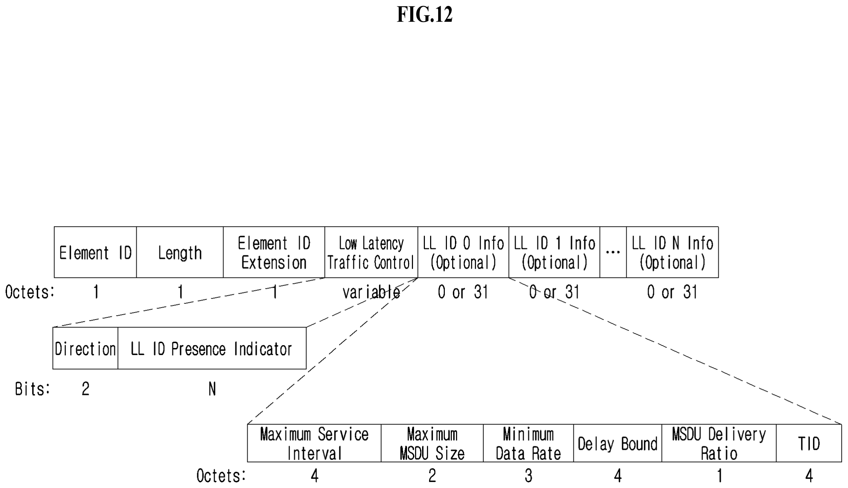

FIG. 12 illustrates the structure of a low-latency traffic element and an LL ID information field format included therein according to an embodiment of the present disclosure.

For example, a low-latency traffic element may consist of an Element ID field, a Length field, an Element ID Extension field, a Low Latency Traffic Control field, and (if present) N LL ID Info fields.

Here, the low-latency traffic control field may include a Direction subfield, an LL ID Presence Indicator subfield, etc.

Additionally, each LL ID information field may include a Minimum Service Interval subfield, a Maximum MSDU Size subfield, a Minimum Data Rate subfield, a Delay Bound subfield, an MSDU Delivery Ratio subfield, a TID subfield, etc.

Referring to Fig. 12, an LL ID N Info field may be configured after a low-latency traffic control field within a low-latency traffic element. Here, N may correspond to a positive integer including 0.

At this time, the presence or absence of the LL ID N Info field may be indicated in the bitmap format of the LL ID presence indicator subfield in the low-latency traffic control field. The length of the LL ID presence indicator subfield may be determined based on the number of LL IDs defined by the AP as described above in the present disclosure.

For example, if the length of the LL ID presence indicator subfield in the low-latency traffic control field in FIG. 12 is 8 bits, the low-latency traffic element may be configured (or may exist) with an LL ID 0 Info field to an LL ID 7 Info field. If the value of the LL ID is defined up to 15, the length of the LL ID presence indicator subfield in the low-latency traffic control field as exemplified in FIG. 12 may be set to 16 bits. In this case, the LL ID 8 Info field to the LL ID 15 Info field may be additionally configured (or may exist) after the LL ID 7 Info field.

For another example, if the values of LL ID are defined up to 2 (i.e., LL ID 0, LL ID 1, LL ID 2), the length of the LL ID presence indicator subfield in the low-latency traffic control field exemplified in FIG. 12 may be set to 3 bits, and the low-latency traffic element may be configured (or may be present) with the LL ID 0 Info field to the LL ID 2 Info field.

If the length of the LL ID presence indicator subfield and the direction subfield is not in octets, the length of the low-latency traffic control field may be set to octets using zero (e.g., zero padding).

Additionally or alternatively, the subfield configuration included in the LL ID N information field (defined by the AP) may not be limited to be the same for each field. For example, the subfield configuration of the LL ID 1 Info field may be defined/set differently from the subfield configuration of the LL ID 2 Info field.

Additionally or alternatively, the configuration of the low-latency traffic element illustrated in FIG. 12 is illustrated as being based on (i.e., considering) QoS characteristic value(s) on which the AP performs scheduling for UL transmitted traffic(s) and DL transmitted traffic(s). However, the configuration of the low-latency traffic element may also be considered in a case where it is not based on QoS characteristic value(s), and thus may not be limited to the configuration in FIG. 12.

### Embodiment 2

This embodiment is about a method of utilizing an LL ID defined by an AP, i.e., an LL ID described in Embodiment 1 of the present disclosure, in an SCS negotiation process between an AP and a STA.

Here, the SCS negotiation process may be based on an SCS request frame transmitted by an STA (e.g., a non-AP STA) to an AP and an SCS response frame transmitted by the AP to the STA in response thereto.

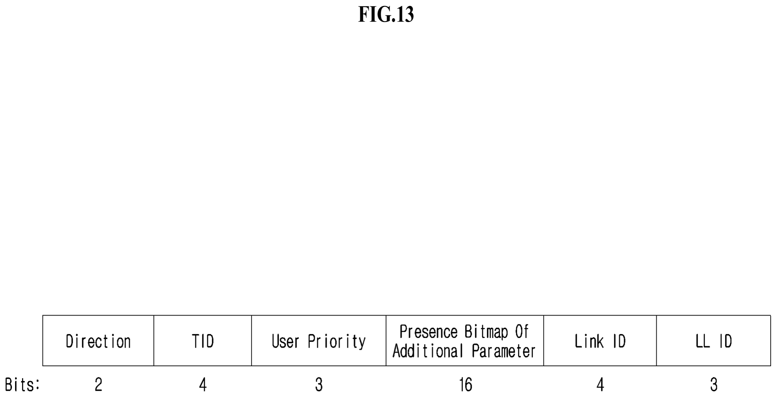

FIG. 13 illustrates an LL ID subfield included in a control information field of a QoS characteristic element according to an embodiment of the present disclosure.

Referring to FIG. 13, the LL ID subfield may be additionally configured in the control information field of the QoS characteristic element in FIG. 11, and may be configured with 3 bits or less after the link ID subfield.

That is, the structure in Fig. 13 may correspond to a limited example that can be applied when the length of the LL ID subfield is 3 bits or less.

FIG. 14 illustrates an LL ID field included in a QoS characteristic element according to an embodiment of the present disclosure.

Referring to FIG. 14, the case where the length of the LL ID field has a maximum length of 1 octet is exemplified, but it is not limited thereto and a case where the length is greater than or equal to 2 octets is not excluded.

For example, if LL ID is defined up to 3 (e.g., LL ID 0, LL ID 1, LL ID 2, LL ID 3), a new LL ID subfield may be present/located by utilizing reserved bits in the control information field of the QoS characteristic element as in FIG. 13, or alternatively, a new LL ID field may be present/located in the QoS characteristic element as in FIG. 14.

In relation to the SCS negotiation process, the STA may transmit an SCS request frame for SCS negotiation with the AP. At this time, the STA may transmit the SCS request frame by including/setting an LL ID, or may transmit it without including/setting it.

First, a case in which an STA includes an LL ID in an SCS request frame will be described.

The STA may transmit an SCS request frame to the AP, including the value of the LL ID that it prefers to be mapped to the QoS characteristic element corresponding to the transmission requirement of the low-latency traffic requested by the STA, based on the LL ID and related information announced from the AP.

That is, the value of the preferred LL ID for the corresponding low-latency traffic may be included in the QoS characteristic element based on the structure of FIG. 13 or FIG. 14, and the corresponding QoS characteristic element may be included in the SCS request frame and delivered to the AP.

In this case, if the LL ID requested by the STA is determined to be an appropriate value, the AP may include the same value as the LL ID value requested by the STA in the SCS response frame and transmit it to the STA.

In contrast, if the LL ID requested by the STA is determined to be an inappropriate value, the AP may directly determine the LL ID and transmit the new LL ID value by including it in the SCS request frame. At this time, the new LL ID value may be determined by the AP based on the information (e.g., QoS characteristic element, etc.) included in the SCS request frame received from the STA and/or the value(s) provided by the STA(s) corresponding to the element/field(s) including the information of the low-latency traffic in the LL ID N information field of the low-latency traffic element. Additionally or alternatively, the AP may additionally request the STA for low-latency traffic related information in order to determine the LL ID.

Next, a case in which an STA does not include an LL ID in an SCS request frame will be described.

The STA may transmit the SCS request frame to the AP without including/setting an LL ID value in the SCS request frame during the SCS negotiation process.

In this case, the AP may transmit an SCS response frame including a new LL ID value determined by the AP to the STA. The new LL ID value may be determined by the AP based on information included in the SCS request frame received from the STA (e.g., a QoS characteristic element, etc.) and/or on one or more elements/fields included in the LL ID N Info field of the low-latency traffic element, which contain low-latency traffic-related information provided by the corresponding STA(s). Additionally or alternatively, the AP may request additional low-latency traffic-related information from the STA in order to determine the LL ID.

### Embodiment 3

This embodiment relates to a method for defining the value of an LL ID for classifying low-latency traffic based on fields/subfields defined in an existing wireless LAN system.

That is, in the above-described embodiment (e.g., embodiment 1), the value of the LL ID is defined as a value greater than or equal to 0 based on the low-latency QoS characteristic(s), but additionally, in the present embodiment, the value of the LL ID may be defined based on a field/subfield defined in a conventional wireless LAN system.

In this regard, the SCS ID value included in the SCS Descriptor element in the SCS request/response frame may be utilized to indicate the LL ID.

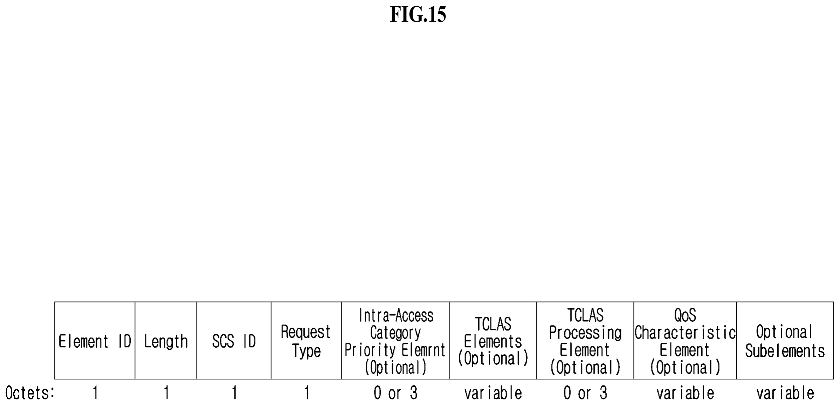

FIG. 15 illustrates conventional SCS descriptor elements applicable to embodiments of the present disclosure.

Referring to FIG. 15, the SCS descriptor element may include an SCS identifier, i.e., an SCS ID field, utilized in the SCS negotiation process, and a QoS Characteristic Element related to the corresponding stream/traffic.

Here, the SCS ID corresponds to an identifier, i.e., an ID, used only between the AP and the STA that has entered into SCS negotiation. The value of the LL ID may be set correspondingly so that the value of the SCS ID can be used in common between the STAs associated with the AP.

However, the length of the conventionally defined SCS ID is 1 octet, which is relatively long, and thus, when multiple LL IDs are used, there is a disadvantage in that overhead may increase. Therefore, it may be burdensome to commonly use the value of the SCS ID as it is for the associated STAs, and a method for compensating for this is required.

To address such a problem, one or more of the methods described below may be applied.

### (Method 1)

Method 1 is a method for indicating an LL ID by utilizing the SCS ID value of the SCS Descriptor element in the SCS request/response frame. Specifically, Method 1 is a method for defining an LL ID by utilizing some bit values of the SCS ID field in the LL ID field/subfield as exemplified in FIGS. 13 and 14.

That is, the LL ID may be defined in one of the following manners:
- A method of defining the last 4 bits of the 8-bit SCS ID field as the LL ID;
- A method of defining the last 3 bits of the 8-bit SCS ID field as the LL ID;
- A method of defining the last 2 bits of the 8-bit SCS ID field as the LL ID;
- A method of defining the last 1 bit of the 8-bit SCS ID field as the LL ID;
- A method of defining the first 4 bits of the 8-bit SCS ID field as the LL ID;
- A method of defining the first 3 bits of the 8-bit SCS ID field as the LL ID;
- A method of defining the first 2 bits of the 8-bit SCS ID field as the LL ID;
- A method of defining the first 1 bit of the 8-bit SCS ID field as the LL ID.

In this regard, an STA performing SCS negotiation with an AP may transmit the SCS request frame including the value of the LL ID field/subfield in the corresponding QoS characteristic element, or may transmit it without including it.

If the AP receives an SCS request frame including an LL ID field/subfield in the QoS characteristic element, the AP may transmit an SCS response frame including the LL ID field/subfield in the QoS characteristic element, or may transmit an SCS response frame without including an LL ID field/subfield in the QoS characteristic element.

Alternatively, if the AP receives an SCS request frame that does not include the LL ID field/subfield in the characteristic element, the AP may transmit an SCS response frame that includes the LL ID field/subfield in the QoS characteristic element, or may transmit an SCS response frame that does not include the LL ID field/subfield in the QoS characteristic element.

In case of method 1, when performing the instruction of LL ID, the value of the existing SCS ID is not changed.

### (Method 2)

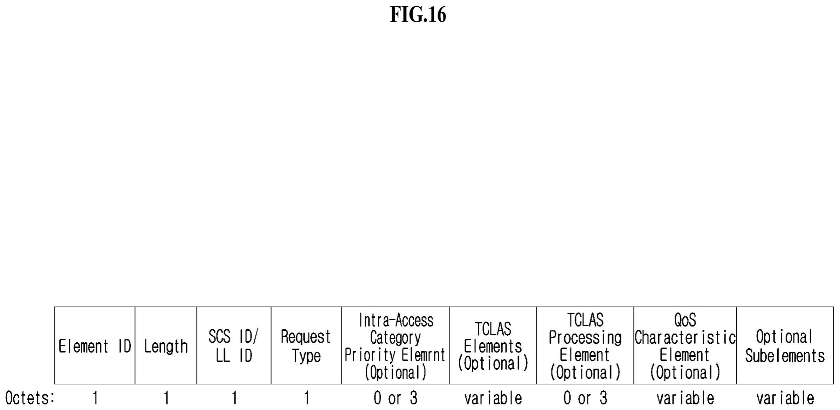

Method 2 is a method for indicating an LL ID by utilizing the SCS ID value of the SCS Descriptor element in the SCS request/response frame. Specifically, Method 2 is a method of dividing and using an SCS ID having a 1-octet length as shown in FIG. 16 for indicating an LL ID.

FIG. 16 illustrates an SCS descriptor element for indicating an LL ID according to an embodiment of the present disclosure.

Referring to FIG. 16, the value of the LL ID may be indicated by utilizing the existing SCS ID field. The field may be named as the SCS ID/LL ID field.

For example, STAs and/or APs supporting the next generation wireless LAN system may be configured/defined to verify the SCS ID and LL ID through decoding the corresponding fields of the SCS descriptor element. In contrast, STAs and/or APs not supporting the corresponding fields can be configured/defined to verify only the SCS ID through decoding thereof.

The SCS ID and LL ID in the above-described field may be defined in one of the following manners:

Method A. Methods in which the number of bits for the LL ID is less than or equal to the number of bits for the SCS ID that is partitioned:
- A method of defining the first 4 bits of the 8-bit SCS ID field as the SCS ID, and the remaining 4 bits as the LL ID;
- A method of defining the first 5 bits of the 8-bit SCS ID field as the SCS ID, and the remaining 3 bits as the LL ID;
- A method of defining the first 6 bits of the 8-bit SCS ID field as the SCS ID, and the remaining 2 bits as the LL ID;
- A method of defining the first 7 bits of the 8-bit SCS ID field as the SCS ID, and the remaining 1 bit as the LL ID;
- A method of defining the first 4 bits of the 8-bit SCS ID field as the LL ID, and the remaining 4 bits as the SCS ID;
- A method of defining the first 3 bits of the 8-bit SCS ID field as the LL ID, and the remaining 5 bits as the SCS ID;
- A method of defining the first 2 bits of the 8-bit SCS ID field as the LL ID, and the remaining 6 bits as the SCS ID;
- A method of defining the first 1 bit of the 8-bit SCS ID field as the LL ID, and the remaining 7 bits as the SCS ID.

For example, if the 8-bit value of the SCS ID field is 10000111, and the first 4 bits are defined as the SCS ID and the following 4 bits are defined as the LL ID, the SCS ID can be set to 1000 and the LL ID can be set to 0111.

Method B. Methods in which the SCS ID has a length of 8 bits regardless of the number of bits of the LL ID:
- A method of defining the last 4 bits of the 8-bit SCS ID field as the LL ID;
- A method of defining the last 3 bits of the 8-bit SCS ID field as the LL ID;
- A method of defining the last 2 bits of the 8-bit SCS ID field as the LL ID;
- A method of defining the last 1 bit of the 8-bit SCS ID field as the LL ID;
- A method of defining the first 4 bits of the 8-bit SCS ID field as the LL ID;
- A method of defining the first 3 bits of the 8-bit SCS ID field as the LL ID;
- A method of defining the first 2 bits of the 8-bit SCS ID field as the LL ID;
- A method of defining the first 1 bit of the 8-bit SCS ID field as the LL ID.

For example, when the value of the 8-bit SCS ID field is 10000111, if the last 4 bits of the 8 bits are defined as the LL ID, the SCS ID may be set to 10000111, and the LL ID may be set to 0111.

The SCS ID/LL ID field in FIG. 16 may be included in both the SCS request frame and the SCS response frame, or may be included only in the SCS request frame, or only in the SCS response frame.

In the case of Method 2, it is different from Method 1 in that no new field/subfield for indicating the LL ID is added within the QoS characteristic element when performing the indication of the LL ID.

### Embodiment 4

This embodiment is about a method of utilizing an LL ID that has been allocated through an SCS negotiation process between an AP and a STA. That is, a method of utilizing an LL ID for low-latency traffic/data is proposed.

In the case of the method in the existing wireless LAN system, it is not possible to identify whether the low-latency traffic/data transmitted and received between the AP and the STA is the low-latency traffic/data corresponding to the LL ID negotiated upon between the AP and the STA. Therefore, it is necessary to specify that the low-latency traffic/data is the traffic/data corresponding to the LL ID allocated through negotiation by including LL ID information mapped to each low-latency traffic/data.

In this regard, a method may be considered of defining a new A-Control subfield containing LL ID Info by using reserved values 7 to 14 in the list of Aggregated-Control (A-Control) subfields.

Table 1 illustrates how to define a new A-Control subfield, low-latency traffic information control, as one of the reserved Control ID values, 7.

**[Table 1]**

| Control ID value | Meaning | Length of the Control Information subfield (bits) |
|---|---|---|
| 0 | Triggered response scheduling (TRS) | 26 |
| 1 | Operating Mode (OM) | 12 |
| 2 | HE link adaption (HLA) | 26 |
| 3 | Buffer status report (BSR) | 26 |
| 4 | UL power headroom (UPH) | 8 |
| 5 | Bandwidth query report (BQR) | 10 |
| 6 | Command and status (CAS) | 8 |
| 7 | **Low Latency Traffic Information** | **8** |
| 8-14 | Reserved | |
| 15 | Ones need expansion surely (ONES) | 26 (Set to all 1s) |

Table 1 is only an example, and it is not excluded that other values among the reserved values may be defined for low-latency traffic information control.

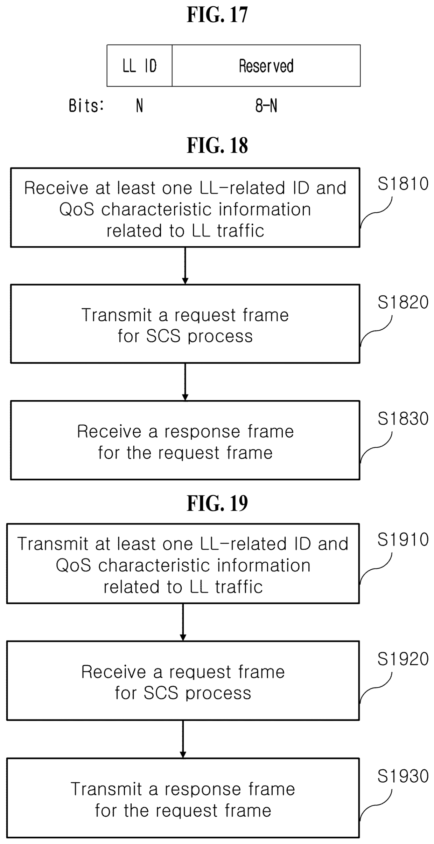

At this time, the structure of the A-Control subfield related to the aforementioned LL ID, i.e., the new low-latency traffic information control, may be defined as in Fig. 17. The low-latency traffic information control may be included when transmitting the traffic/data.

FIG. 17 illustrates the structure of low-latency traffic information control based on A-Contol according to an embodiment of the present disclosure.

Referring to FIG. 17, a 1-octet low-latency traffic information control may be composed of an N-bit LL ID subfield and the remaining reserved bits (i.e., 8-N bits).

With respect to the LL ID subfield, when configuring low-latency traffic/data corresponding to one LL ID among the LL ID(s) allocated through SCS negotiation between the AP and the STA, the LL ID may be included in the LL ID subfield of the low-latency traffic information control of the A-Control. Through this, the STA receiving the traffic/data may confirm/recognize whether the message (i.e., the traffic/data) is low-latency traffic/data with certain transmission requirements through the LL ID subfield.

Hereinafter, the operation of the STA according to the embodiment of the present disclosure described above will be described through FIG. 18 and FIG. 19.

That is, the examples of FIG. 18 and FIG. 19 may correspond to some of the various examples of the present disclosure. For example, in FIG. 18 and FIG. 19, the first STA may correspond to a non-AP STA, and the second STA may correspond to an AP.

FIG. 18 illustrates an operation flow chart by a first STA according to an embodiment of the present disclosure.

Referring to FIG. 18, the first STA may receive at least one LL-related ID (identifier) (e.g., the LL ID described above in the present disclosure) and QoS (quality of service) characteristic information related to low latency (LL) traffic from the second STA (S1810).

Here, the at least one LL-related ID may correspond to an ID commonly applied to one or more STAs associated with the second STA.

In this regard, at least one LL-related ID and QoS characteristic information may be included in an LL traffic-related element conveyed via a beacon frame or a probe response frame. Additionally or alternatively, the beacon frame or the probe response frame may further include information about the number of LL-related IDs defined by the second AP.

For example, as described above in the present disclosure (e.g., embodiment 1), the AP may announce/transmit the LL-related ID and QoS characteristic information therefor to the associated STA(s).

At this time, when M LL-related IDs are defined by the second STA, the LL traffic-related element (e.g., the low-latency traffic element of FIG. 12) may include a control field including information indicating whether an Nth LL-related ID exists and an information field including QoS characteristic information for the Nth LL-related ID.

Additionally or alternatively, information indicating whether the Nth LL-related ID exists may be indicated based on a bitmap format of M-bits. Additionally or alternatively, the control field may further include information on the direction of traffic. Additionally or alternatively, QoS characteristic information for the Nth LL-related ID may include one or more of maximum service interval information, maximum MSDU size information, minimum data rate information, delay limit information, MSDU delivery ratio information, or traffic ID (TID) information.

The first STA may transmit a request frame (e.g., an SCS request frame) for an SCS procedure to the second STA (S1820), and receive a response frame (e.g., an SCS response frame) for the request frame from the second STA (S1830).

In this regard, at least one of the request frame or the response frame may include information related to allocation of an LL-related ID.

For example, as described above in the present disclosure (e.g., embodiment 2), the SCS request/response frame may include the value of the LL ID associated with the corresponding traffic/data.

Specifically, in at least one of the request frame of step S1820 or the response frame of step S1830, information related to allocation of an LL-related ID may be indicated by an LL-related field included in a QoS Characteristic element (e.g., the LL ID field of FIG. 14), or may be indicated by an LL-related subfield included in a Control Info field in the QoS Characteristic element (e.g., the LL ID subfield of FIG. 13).

In this regard, the request frame of step S1820 may include information requesting allocation of the first LL-related ID determined by the first STA. At this time, if the allocation of the first LL-related ID is determined to be appropriate, the response frame of step S1830 may include information about the first LL-related ID. On the other hand, if the allocation of the first LL-related ID is determined to be inappropriate, the response frame of step S1830 may include information about the second LL-related ID determined by the second STA instead of the first LL-related ID. That is, in this case, information about the LL-related ID selected as appropriate by the second STA, rather than the LL-related ID requested/selected by the first STA, may be included in the response frame.

Additionally or alternatively, if the request frame of step S1820 does not include information requesting allocation of an LL-related ID, the response frame of step S1830 may include information for the LL-related ID determined by the second STA.

Additionally or alternatively, the first STA may receive, from the second STA, a frame including data based on the aforementioned LL traffic. At this time, the frame may include information indicating an LL-related ID for the data. Here, the information indicating the LL-related ID may be included in an aggregated-control (A-Control) subfield (e.g., low-latency traffic information control of FIG. 17) based on an LL-related control ID value among a plurality of predefined control ID values.

The method performed by the first STA described in the example of FIG. 18 may be performed by the first device (100) of FIG. 1. For example, one or more processors (102) of the first device (100) of FIG. 1 may be configured to receive LL-related ID and QoS characteristic information related to LL traffic from the second STA (200) through one or more transceivers (106), transmit a request frame for an SCS process to the second STA (200), and receive a response frame for the request frame from the second STA (200). Furthermore, one or more memories (104) of the first device (100) may store commands for performing the method described in the example of FIG. 18 or the examples described above when executed by one or more processors (102).

FIG. 19 illustrates an operation flow chart by a second STA according to an embodiment of the present disclosure.

Referring to FIG. 19, the second STA may transmit at least one LL-related ID (identifier) (e.g., the LL ID described above in the present disclosure) and quality of service (QoS) characteristic information related to low latency (LL) traffic to the first STA (S1910).

Here, at least one LL-related ID may correspond to an ID commonly applied to one or more STAs associated with the second STA.

The second STA may receive a request frame (e.g., an SCS request frame) for an SCS procedure from the first STA (S1920) and transmit a response frame (e.g., an SCS response frame) to the request frame to the first STA (S1930).

In this regard, at least one of the request frame or the response frame may include information related to allocation of an LL-related ID.

Specific descriptions of the LL-related ID and QoS characteristic information, request frame, response frame, information related to allocation of LL-related ID, information indicating LL-related ID for data, etc. of Fig. 19 are the same as those described in the example of Fig. 18, and therefore, redundant descriptions are omitted.

The method performed by the second STA described in the example of FIG. 19 may be performed by the second device (200) of FIG. 1. For example, one or more processors (202) of the second device (200) of FIG. 1 may be configured to transmit LL-related ID and QoS characteristic information related to LL traffic to the first STA (100) through one or more transceivers (206), receive a request frame for an SCS process from the first STA (100), and transmit a response frame for the corresponding request frame to the first STA (100). Furthermore, one or more memories (204) of the second device (200) may store commands for performing the method described in the example of FIG. 19 or the examples described above when executed by one or more processors (202).

In the existing wireless LAN system, an SCS ID that can be utilized only between an AP and a STA performing SCS negotiation in the SCS process is defined. In contrast, the LL ID related to the low-latency traffic classification proposed in the present disclosure has a new feature that is commonly applied to STAs associated with an AP. In this regard, the proposed method in the present disclosure is a method for defining and announcing the corresponding LL ID, a method for utilizing/allocating/negotiating the LL ID in the SCS process, a method for defining the LL ID by utilizing an existing field, and a method for utilizing the LL ID for LL traffic/data. Through the proposed method in the present disclosure, a new effect can be achieved in which classification of low-latency traffic that can be commonly applied to STAs associated with an AP can be supported.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless LAN system, the method comprising:
receiving, from a second STA, at least one low latency (LL)-related identifier (ID) and quality of service (QoS) characteristic information related to LL traffic;
transmitting, to the second STA, a request frame for a stream classification service (SCS) process; and
receiving, from the second STA, a response frame for the request frame,
wherein the at least one LL-related ID is commonly applied to one or more STAs associated with the second STA, and
wherein at least one of the request frame or the response frame includes information related to allocation of a LL-related ID.

2. The method of claim 1,
wherein the at least one LL-related ID and the QoS characteristic information are included in an LL traffic-related element delivered through a beacon frame or a probe response frame.

3. The method of claim 2,
wherein, based on M LL-related IDs being defined by the second STA,
the LL traffic-related element includes a control field including information indicating presence of an N-th LL-related ID and an information field including QoS characteristic information for the N-th LL-related ID.

4. The method of claim 3,
wherein the information indicating presence of the N-th LL-related ID is indicated based on an M-bit bitmap format.

5. The method of claim 3,
wherein the control field further includes information for a direction of traffic.

6. The method of claim 3,
wherein the QoS characteristic information for the N-th LL-related ID includes at least one of maximum service interval information, maximum MSDU size information, minimum data rate information, latency bound information, MSDU delivery ratio information, or traffic ID (TID) information.

7. The method of claim 2,
wherein the beacon frame or the probe response frame further includes information for a number of LL-related IDs defined by the second STA.

8. The method of claim 1,
wherein, in at least one of the request frame or the response frame,
the information related to allocation of the LL-related ID is indicated by an LL-related field included in a QoS characteristic element or by an LL-related subfield included in a control information field within the QoS characteristic element.

9. The method of claim 1,
wherein the request frame includes information requesting allocation of a first LL-related ID determined by the first STA,
wherein the response frame includes information for the first LL-related ID based on suitability of the allocation of the first LL-related ID, and
wherein the response frame includes information for a second LL-related ID determined by the second STA instead of the first LL-related ID based on unsuitability of the allocation of the first LL-related ID.

10. The method of claim 1,
wherein, based on the request frame not including information requesting allocation of the LL-related ID, the response frame includes information for the LL-related ID determined by the second STA.

11. The method of claim 1, further comprising:
receiving, from the second STA, a frame including data based on the LL traffic,
wherein the frame further includes information indicating a LL-related ID for the data.

12. The method of claim 11,
wherein the information indicating the LL-related ID is included in an aggregated-control (A-Control) subfield based on an LL-related control ID value among a plurality of predefined control ID values.

13. The method of claim 1,
wherein the first STA corresponds to a non-access point (non-AP) STA, and the second STA corresponds to an AP.

14. An apparatus for a first station (STA) in a wireless local area network (WLAN) system, the apparatus comprising:
at least one transceiver; and
at least one processor connected to the at least one transceiver,
wherein the at least one processor is configured to:
receive, from a second STA, at least one low latency (LL)-related identifier (ID) and quality of service (QoS) characteristic information related to LL traffic;
transmit, to the second STA, a request frame for a stream classification service (SCS) process; and
receive, from the second STA, a response frame for the request frame,
wherein the at least one LL-related ID is commonly applied to one or more STAs associated with the second STA, and
wherein at least one of the request frame or the response frame includes information related to allocation of a LL-related ID.

15. A method performed by a second station (STA) in a wireless LAN system, the method comprising:
transmitting, to a first STA, at least one low latency (LL)-related identifier (ID) and quality of service (QoS) characteristic information related to LL traffic;
receiving, from the first STA, a request frame for a stream classification service (SCS) process; and
transmitting, to the first STA, a response frame for the request frame,
wherein the at least one LL-related ID is commonly applied to one or more STAs associated with the second STA, and
wherein at least one of the request frame or the response frame includes information related to allocation of a LL-related ID.

16. An apparatus for a second station (STA) in a wireless local area network (WLAN) system, the apparatus comprising:
at least one transceiver; and
at least one processor connected to the at least one transceiver,
wherein the at least one processor is configured to:
transmit, to a first STA, at least one low latency (LL)-related identifier (ID) and quality of service (QoS) characteristic information related to LL traffic;
receive, from the first STA, a request frame for a stream classification service (SCS) process; and
transmit, to the first STA, a response frame for the request frame,
wherein the at least one LL-related ID is commonly applied to one or more STAs associated with the second STA, and
wherein at least one of the request frame or the response frame includes information related to allocation of a LL-related ID.

17. A processing unit configured to control a station (STA) in a wireless local area network (WLAN) system, the processing unit comprising:
at least one processor; and
at least one computer memory operably connected to the at least one processor, and based on being executed by the at least one processor, storing instructions for performing a method according to any one claim of claims 1 to 13.

18. At least one non-transitory computer-readable medium storing at least one instruction, wherein:
the at least one instruction controls a device to perform a method according to any one claim of claims 1 to 13 in a wireless local area network (WLAN) system by being executed by at least one processor.
